(19) Europäisches Patentamt
European Patent Office
Office européen des brevets

(11) **EP 4 711 994 A1**

(12) **EUROPEAN PATENT APPLICATION**

(43) Date of publication:
**18.03.2026 Bulletin 2026/12**

(21) Application number: **24382979.3**

(22) Date of filing: **13.09.2024**

(51) International Patent Classification (IPC):
**G06Q 10/04** $^{(2023.01)}$    **G06N 10/00** $^{(2022.01)}$
**G06Q 10/08** $^{(2024.01)}$    **G06F 8/41** $^{(2018.01)}$
**G06N 10/60** $^{(2022.01)}$

(52) Cooperative Patent Classification (CPC):
**G06Q 10/04; G06N 10/00; G06N 10/60;
G06Q 10/043; G06Q 10/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Fundación Tecnalia Research &
Innovation**
**20009 Donastia-San Sebastían Gipuzkoa (ES)**

(72) Inventors:
• **OSABA, Eneko**
 **E-20009 San Sebastián - Guipúzcoa (ES)**
• **VILLAR-RODRÍGUEZ, Esther**
 **E-20009 San Sebastián - Guipúzcoa (ES)**

(74) Representative: **Balder IP Law, S.L.**
**Paseo de la Castellana 93**
**5ª planta**
**28046 Madrid (ES)**

(54) **METHODS AND DEVICES FOR OPTIMIZING STORAGE OF ITEMS**

(57)    A computer-implemented method for optimizing the disposition of items in one or more locations of a physical environment is provided. The method comprises: providing (132) a plurality of available locations in which items can be disposed; providing (131) a plurality of items to be located; defining (141) a problem associated to a WOP for storing as many items as possible at ground level, said problem being defined as a constrained quadratic model problem (CQM problem) to decide the location I in which each item i should be stored; solving (143) the CQM model problem by maximizing the amount of items i stored at the ground level of the available set of locations, thus obtaining partial solutions; completing (145) each partial solution (144) by stacking, if required, all items that have been left unstacked; eliminating (149) repeated and unfeasible solutions, thus obtaining a set of N feasible solutions to the WOP; selecting (16) one or more initial solutions of the N feasible solutions and optimizing (18) them, providing a most optimal one; wherein solving (143) the CQM problem is done at least partially in a quantum computer.

FIG. 6

**Description**

**TECHNICAL FIELD**

The present invention relates to the field of space optimization, in particular to a warehouse optimization problem. More specifically, the present invention relates to methods and computing devices and systems capable of optimizing the storage of items after solving a warehouse optimization problem with quantum computing.

**STATE OF THE ART**

Nowadays warehouses have extraordinary importance for a business' competitiveness and profitability. Space utilization is a major operational challenge in warehouse optimization. Warehouse space optimization is key to effective warehouse operations.

The main goal of warehouse optimization is twofold: to take advantage of as much available space as possible and to store all items in as less time as possible. Available space typically refers not only to surface space (horizontal space), but also to the vertical dimension (space in height), which is often underutilized. The storage capacity of a warehouse can be dramatically expanded when shelves are used or items are stacked one on another. However, storing non-stacked items (thus occupying horizontal space) is less costly than storing them in vertical dimension. Therefore, if time optimization has priority over space optimization, items are preferably horizontally stored even though more space is occupied.

To deal with this challenge, a real-world industrial problem named warehouse optimization problem (WOP) has been developed and mathematically formulated. This problem describes a warehouse composed of locations and items to be stored. The main purpose of WOP is to assign a storage location to each item minimizing both the storage time and the total area occupied.

This problem is conventionally solved using classical (digital) computers. The operation or dynamics of this process is representable by way of equations with multiple terms and variables. The existence of multiple variables and/or complex relationships between the different variables makes the optimization of the equations difficult.

Solving this problem (WOP) with a classical computer implies several drawbacks. In particular, because of the restrictions and constraints of the problem, generating a feasible solution is very costly in terms of computation capacity.

Therefore, there is a need for new methods of solving optimization problems, i.e. optimizing the storing of items in a physical environment, in an effective manner and in short time.

**DESCRIPTION OF THE INVENTION**

The drawbacks of conventional computing techniques applied to the optimization of the storage of items are solved by the present disclosure.

The present disclosure provides a method for optimizing the selection of locations in which a plurality of items should be stored, taking into account the optimization (minimization) of the space occupied and/or the time required to store all the items. The method is based on solving a storage optimization problem (WOP). The objective of the WOP is, having a set of available locations and a group of items to store, to assign a storage location in which each item should be disposed and a specific height to each item, minimizing both the storage time and/or the total area occupied. The problem is at least partially solved using quantum computing.

Therefore, the WOP is intended to optimize one or two objectives: a first objective (o1) referring to minimizing the occupied space and/or a second objective (o2) referring to minimizing the storage time.

Each item is defined by the following features: its type (ID) and the area it occupies, this area being an integer constant value except for prohibited placements. Items of the same type can be stacked up to a maximum height. Each location is defined by *i)* total surface of the location; *ii)* occupied surface; *iii)* time needed to store an item in the location; and *iv)* extra time for each height level.

Other considerations that may be taken into account are: Items of the same category can be stacked. The maximum stacking height of one item must not be exceeded. Also, there are items that cannot be stacked (that is, with 1 as maximum stacking height). Each of the locations can be categorized as a floor or a shelf. While all items can be stored on the floor, only enabled items can be stored on shelves. Items stored in a location must not exceed its maximum surface area.

A method for solving a warehouse optimization problem is thus provided.

In a first aspect of the disclosure, a computer-implemented method for optimizing the disposition of items in one or more locations of a physical environment is provided. The method comprises:

providing a plurality of available locations $l_i \in L$ in which items can be disposed, wherein each location of the plurality of available locations is defined by: *i)* total surface of the location; *ii)* already occupied surface; *iii)* time needed to store an item in the location; and *iv)* extra time needed for each height level;

providing a plurality of items i ∈ I to be located, wherein each item of the plurality of items is defined or characterized by: its type (type ID) and the area $a_{i,l}$ it occupies, which is an integer constant value except for prohibited placements (typically in shelf-type locations), where $a_{i,l} = \infty$; wherein items of the same type can be stacked up to a maximum height of $h_i$ (where $h_i$=1 if item i cannot be stacked).

defining a problem associated to a WOP for storing as many items as possible at ground level, said problem being defined as a constrained quadratic model problem (CQM problem) to decide the location L in which each item i should be stored;

solving the CQM problem by maximizing the amount of items i stored at the ground level of the available set of locations, thus obtaining partial solutions;

completing each partial solution by stacking all items that have been left unstacked (if required, because depending on the application, there might not be necessary to stack items in height);

eliminating repeated and unfeasible solutions, thus obtaining a set of N feasible solutions to the WOP; and

selecting one or more initial solutions of the N feasible solutions and optimizing them, providing a most optimal one;

wherein solving the CQM problem is done at least partially in a quantum computer.

By maximizing the amount of items i stored at the ground level of the available set of locations, to solve the CQM problem, a set $X = \{X_1, \ldots, X_I\}$ of lists is obtained, in which each Xi is a list associated with a single item i, $X_i = \{x_{i1}, \ldots, x_{iL}\}$, where $x_{il}$ is 1 if the item i is stored in location L, and 0 otherwise, wherein set X contains the partial solutions to the WOP problem.

The problem associated to a WOP and defined as a CQM problem is for storing as many items as possible at ground level. In this text, this problem associated to a WOP and defined as a CQM problem is also referred to as sub-WOP problem or simply sub-WOP.

In embodiments, the CQM problem is defined from the plurality of items, the plurality of locations, problem restrictions and a cost function.

In embodiments, the cost function of the CQM problem is to maximize the number of items stored at ground level.

In embodiments, maximizing the number of items stored at ground level is formulated as follows:

$$o = \min - \sum_{l=1}^{L} x_{il} \ \forall i \epsilon \{1, \ldots, I\}$$

wherein $x_{il}$ are the elements of list Xi which is a list associated with item i, $X_i = \{x_{i1}, \ldots, x_{iL}\}$, where $x_{il}$ is 1 if the item i is stored in location $l$, and 0 otherwise, I is the total number of items and L is the total number of locations.

In embodiments, to maximize the number of items stored at ground level the following restrictions are imposed:

a first constraint according to which an item i must be stored in, at most, one location I:

$$\sum_{l=1}^{L} x_{il} \leq 1 \ \forall i \epsilon \{1, \ldots, I\}$$

a second constraint according to which items located in one specific location L do not exceed its maximum available area C, wherein $a_{i,l}$ is the area item i occupies at location $l$ and $c_l$ is the capacity of location $l$:

$$\sum_{i=1}^{I} x_{il} * a_{il} \leq c_l \ \forall l \epsilon \{1, \ldots, L\}$$

a third constraint according to which only enabled items can be placed on shelves:

$$\sum_{l=1}^{L} x_{il} * a_{il} \geq 0 \ \forall i \epsilon \{1, \ldots, I\}$$

a fourth constraint according to which all non-stackable items are stored:

$$\left(\textstyle\sum_{i=1}^{I} x_{il}\right) - p_i \geq 0 \;\; \forall i \epsilon \{1, \dots, I\}$$

where $p_i$ is 0 if item i can be stacked and 1 otherwise.

The WOP (complete WOP, in contrast to the sub-WOP) aims at assigning a storage location in which each item should be disposed and a specific height to each item, minimizing both the storage time and/or the total area occupied.

The CQM problem is built using the plurality of items and plurality of locations, problem restrictions, if any, and a cost function. Thus, the method solves the constrained optimization problem featuring the cost function to be optimized using at least partially a quantum computer. The cost function or objective function of the CQM problem (corresponding to the sub-WOP) is to maximize the number of items stored at ground level. A computing device or system carrying out the method provides the cost function equation as part of the CQM formulation. The cost function equation provided by the computing device or system is optimized by a hybrid solver (quantum-classical solver) that uses the quantum processor in its operation. The value of the cost function will be optimized in an iterative process. Obtaining a set of N feasible solutions to the WOP is referred to as initialization stage and is solved in two main phases: In a first phase, which can be referred to as processing phase, and which is at least partially executed in a quantum computer, the sub-WOP is created and solved, obtaining a set of partial solutions, in which as many items as possible are stored at the ground level of the available set L of locations. In a second phase, which can be referred to as post-processing phase, a set of N random feasible solutions to the problem is obtained, including stacked items, from the partial solutions. The creation of feasible solutions is part of a process of initialization of solutions. The N random feasible solutions are obtained from the partial solutions obtained when solving the CQM problem (sub-WOP). This second phase can be executed either in a quantum computer or in a classical (also referred to as digital) computer.

Once the set of N feasible solutions to the WOP have been obtained, a best solution is found following conventional algorithms therefor, typically executed in a classical computer. Obtaining the best solution can be for example performed by first selecting a best initial solution and subsequently optimizing it using a local search optimization technique.

In a preferred embodiment, the quantum computer used in the execution of the initialization phase to obtain a set of partial solutions is a quantum annealer. One or more quantum processors, such as quantum annealers, may be used.

The first phase of the initialization stage is in charge of solving the here called sub warehouse optimization problem (sub-WOP or subproblem), whose objective is to store as many items as possible at the ground level of the available set L of locations. The problem (or subproblem) is built as a Constrained Quadratic Model problem (CQM problem), which is a mathematical model defined by integer, real, and binary variables. CQM admits linear and quadratic restrictions, allowing the introduction of equalities and inequalities and employing quadratic objective functions. This first phase is executed by a hybrid method (hybrid quantum-classical solver) which uses at least a quantum computer.

To obtain a set of partial solutions (of items stored at the ground level), which is at least partially executed in a quantum computer, the CQM problem is input to a solver, in particular a hybrid solver. The hybrid solver is implemented as a hybrid method, that is to say, a method which combines classical and quantum computing techniques or algorithms.

In embodiments of the disclosure, solving the CQM model problem to obtain partial solutions to the CQM model problem, comprises:

providing the CQM problem to a solver;

creating a plurality of threads of the CQM problem, wherein each thread is composed of a classical heuristic software module and a quantum software module;

executing each thread in parallel, wherein each quantum software module is executed in a quantum processor, thus obtaining one solution to the CQM problem per thread.

When threads are executed in parallel, a set of quantum computers, such as a set of quantum annealers, is preferably used. Each quantum computer operates independently from the others. Each quantum computer codifies a problem and provides a solution to that problem. When several quantum computers, such as annealers, operate in parallel, several solutions are obtained, one per annealer.

For example, the CQM formulation of the problem (definition of CQM problem) is introduced as input into a classical front end. In this first block, the solver creates a plurality of threads, which can be seen as equally structured branches.

Each created thread is then executed in parallel on a set of computers. Each thread is composed of at least one software module. Preferably, each thread is composed of a Classical Heuristic software Module (CH) and a Quantum software Module (QM). CH modules will be executed in one or more classical computer. QM modules will be executed in one or more quantum computers. In particular, each branch has one QM which in turn is executed in a corresponding quantum processor (such as a quantum annealer). In each thread, the CH is in charge of exploring the problem-solution space by using traditional heuristics. This is typically done in a classical computer. During this exploration, the CH formulates different quantum queries (QM module), which are executed by the quantum computer of the corresponding branch, and which are partial representations of the problem that are accommodated to the QPU (processor based on qubits) capacity. Each quantum annealer is capable of processing a thread at each time. Several threads are processed in parallel in a corresponding number of quantum annealers. The solutions provided by the QPU are employed to guide the CH toward promising areas of the solution search space. Furthermore, QM can even improve the solutions found by the CH. The solver uses a quantum processor or set of quantum processors for executing the quantum queries.

For example, one or more quantum annealers comprising 5616 qubits organized in a Pegasus topology can be used. The quantum processor, such as quantum annealer, operates in QUBO (Quadratic unconstrained binary optimization) format, which is the native format which the QPU understands. Thus, each quantum annealer (that could be one per thread) codifies each thread in the state of the qubits which compose the quantum annealer. In other words, each QM codes in a language understandable by the quantum annealer a function described by each thread. The quantum annealer, once coded with the thread, starts operating (the qubits system described by the thread evolves until the annealer reaches a state of minimum energy (balance), which is its optimized state).

Finally, after a predefined time limit T, all generated branches (threads) stop their execution and return their solution to the front end. Then, the solver forwards a set of solutions (one per thread) to the CQM problem introduced as input. These solutions are solutions to the CQM problem (sub-WOP). HM and QM communicate in an asynchronous way so that latency in a specific branch does not block the progress of the whole solver. The predefined time limit can be, for example, 5 seconds.

When a certain criterion is met, the computing device or system determines that the solution optimizes the problem to a certain degree. A trade-off between execution or running time of the method and the level of optimization is to be set for the solution to be provided in a time portion (predefined time limit) adequate with the problem and concerned process, apparatus or system.

The computing device or system repeats the aforesaid process one or more times as long as the value of the cost function can be further reduced. The resulting value of the cost function for each iteration is preferably stored. In this way the computing device or system will assess whether sufficient optimization has been achieved in the problem.

As has been explained, the hybrid solver generates a plurality of threads which are executed in parallel to solve the problem in parallel. After the predefined time limit, the solver provides the set of N solutions to the CQM problem.

Therefore, when solving sub-WOP using a quantum-classical hybrid computer, the solver creates a population of N partial solutions (first phase), which are subsequently completed. There are therefore N partial solutions. Given a set of items to be stored, a partial solution indicates in which location each item can be stored, taking into account that each item is stored at ground level and that there may be items which cannot be stored.

As a matter of example, considering 10 items to be stored and 3 possible locations, one partial solution can be: [1, 1, 1, 2, 2, 2, 3, null, null, null], which means that the three first items are stored in location "1", the three next items are stored in location "2", the seventh item is stored in location "3" and the three last items have not been stored (indicated by "null"). These non-stored items will be stacked up in the second phase.

A hybrid solver designed to handle low-level operational details is preferably used, so that its use does not require specific knowledge about how to properly parameterize the quantum computer. Preferably, a hybrid solver which takes advantage of the quantum processor's capability is used, to quickly find promising solutions, expanding this property to a wide range of input types and sizes. Preferably, a hybrid solver providing a user-friendly employment of the quantum resources is used. For example, a hybrid solver which does not require a native formulation of the problem is preferably used to prevent inefficient translations of the problem which can critically affect the performance of the solver.

Quantum annealers are suitable to solve the posed problem because they are designed to solve optimization problems.

Once the partial solutions have been obtained, each partial solution is completed (second phase) by stacking all items that have been left unstacked after the first phase. In embodiments, stacking all items that have been left unstacked is done as follows:

calculating a number of stacks that can be built for each item type;

assigning each unstacked item to one stack, respecting the maximum height $h_i$, defined for its corresponding item type.

In other words, first, the number of stacks that can be built for each item type is calculated. A stack refers to items disposed one on top of another one forming a pile. Then, each unstacked item is assigned to one stack, respecting the maximum height $h_i$, defined for its corresponding item type. Thus, the partial solution is transformed into a complete WOP solution.

Considering the former example, in particular the partial solution [1, 1, 1, 2, 2, 2, 3, null, null, null], in the second phase the three non-stored items are stacked. To achieve this, the number of possible stacks on which these non-stored items (labelled as "null") can be stacked is calculated. Assuming, for example, that all the items are of "type 1", then there exist seven possible stacks on which the non-stored items can be stacked. In other words, any of the seven items stored at ground level can become piles or stacks on which the non-stored items can be stacked.

The second phase ends by eliminating all repeated and unfeasible solutions. Thus, N feasible solutions are provided. In the context of the present disclosure, an unfeasible solution is a solution of the CQM problem that violates any of the problem's constraints, which are conditions that must be met to ensure a practical and valid solution.

In embodiments, after completing each partial solution by stacking all items that have been left unstacked, mutant solutions are created, such that all items placed at ground level are stacked in a feasible pile with a certain probability. The motivation for this step is to add diversity to the population of solutions. To do this, typically for each of the N solutions, a new mutant solution is created from the previously generated WOP solution, where all items placed at ground level are stacked in a feasible pile with a certain probability (for example, 50% probability). Solutions created in this step are added to the population. When a mutant solution is created for each of the N solutions, a total population of 2N solutions is created.

A mutant solution is a variation of an existing solution, in which items being at ground floor are randomly stacked.

As a matter of example, given a solution [1-1, 1-2, 1-1, 2-1, 2-2, 2-3], in which in each pair X-Y, X denotes the location in which an item has been placed, and Y denotes the height, for example pair "1-1" means that the item has been stored at location "1" with height "1" (ground level), and pair "2-3" means that the item has been stored at location "2" with height "3" (therefore on top of two other items).

A possible mutant solution is: [1-1, 1-2, 1-3, 2-1, 2-2, 2-3], in which the third item has evolved from "1-1" to "1-3", meaning that it was originally at ground level and has been stacked in the existing stack at location "1". In embodiments, the physical environment is a warehouse.

Classical processors, i.e. processors that are non-quantum, can take the form a central processing unit -CPU-, a graphics processing unit -GPU-, a field-programmable gate array -FPGA-, or a combination thereof. A plurality of classical processors can be used, for example configured to perform distributed processing. The classical processor(s) typically runs classical linear algebra functions.

Quantum processors, or QPUs, can take the form of superconducting circuits, photonic circuits, ion-trap circuits, neutral atom circuits, quantum-gate based devices, etc. A plurality of such processors can be used, for example configured as a cluster of QPUs for distributing the solving of a computing task between several processors of this type, so that each of them computes portions (i.e. threads) thereof in parallel. Any quantum algorithm capable of solving a problem in QUBO format can be used. Typically, QPUs are capable of conducting linear algebra operations, in this case quantum linear algebra operations, faster than classical processors, and even more so when large objects are being evaluated. In fact, classical processors usually struggle significantly with these operations whenever a computing problem has to be solved. QPU(s) runs quantum linear algebra functions such as QUBO format.

Current QPUs, consisting of Noisy Intermediate-Scale Quantum (NISQ) devices, have sufficient capability to handle the identified sub-WOP. For example, the currently most advanced commercial quantum annealers have more than 5600 qubits and more than 35000 couplers arranged in a Pegasus topology.

In some of these embodiments, both at least one quantum processor and at least one classical processor are used.

The combination of the processing capabilities of both quantum and classical processors improves the overall performance of the method compared to when only processed with classical processors.

On the one hand, a purely classical method would use linear algebra subroutines. The computational cost of solving problems with algebra subroutines on classical hardware depends on factors such as the specific library used, the computer language used, the classical processor used, but it is always a polynomial in the size of the matrix input. On the other hand, using a quantum processor allows to use quantum algorithms having a lower computational cost, polynomial in the logarithm of the size of the matrix input. Notwithstanding, certain quantum processors feature some problems or limitations, e.g. limited memory, noise levels, etc., and thus it may not be possible to solve the whole method only with quantum processors.

The proposed method has proven to_provide a promising performance for instances with a large number of items, such as more than 120 items.

A second aspect of the disclosure relates to a data processing device -or data processing system- comprising means for carrying out the steps of a method according to the first aspect of the disclosure.

In some embodiments, the data processing device -or the data processing system- further comprises at least one quantum processor, or at least one classical processor, or both.

A third aspect of the disclosure relates to a device comprising: at least one processor, and at least one memory comprising computer program code for one or more programs; the at least one processor, the at least one memory, and the computer program code configured to cause the device to at least carry out the steps of a method according to the first aspect of the disclosure. A fourth aspect of the disclosure relates to a computer program product comprising instructions which, when the program is executed by a computer, cause the computer to carry out the steps of a method according to the first aspect of the disclosure.

A fifth aspect of the disclosure relates to a non-transitory computer-readable medium encoded with instructions that, when executed by at least one processor or hardware, perform or make a device to perform the steps of a method according to the first aspect of the disclosure.

A sixth aspect of the disclosure relates to a computer-readable data carrier having stored thereon a computer program product according to the fourth aspect of the disclosure.

A seventh aspect of the disclosure relates to a data carrier signal carrying a computer program product according to the fourth aspect of the disclosure.

Additional advantages and features of the invention will become apparent from the detail description that follows and will be particularly pointed out in the appended claims.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figures 1A-1B schematically illustrate computing devices according to embodiments of the present disclosure.

Figure 2 schematically illustrates a computing system according to embodiments of the present disclosure.

Figure 3 shows a flow diagram of a method for optimizing the storage of items in one or more locations according to the present disclosure.

Figure 4 shows a flow diagram of the steps of first level placement and post-processing of the method for optimizing the storage of items according to the present disclosure.

Figure 5 illustrates an example of encoding of the problem solutions provided by the method of this disclosure.

Figure 6 schematically illustrates a method for optimizing the disposition of items in a physical environment according to embodiments of this disclosure.

Figure 7 schematically shows a block diagram of a hybrid solver according to embodiments of this disclosure.

## DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing apparatuses and results according to the invention.

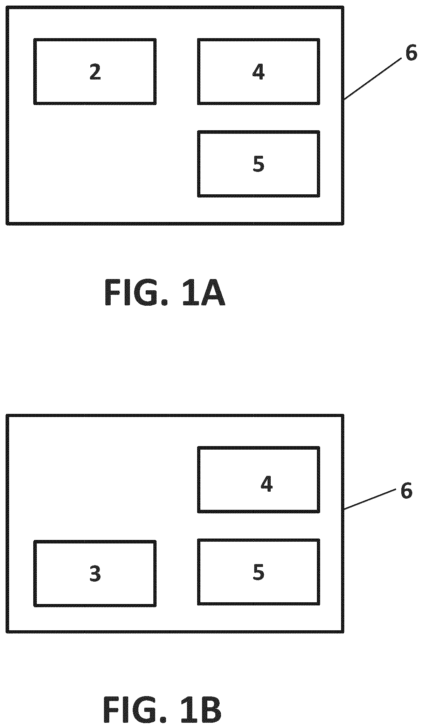

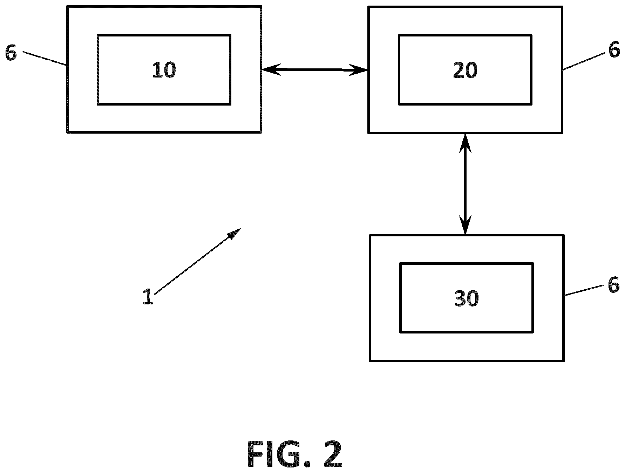

Figures 1A-1B schematically illustrate computing devices 6 according to embodiments of this disclosure. The computing device 6 can be part of a computing system, such as the computing system 1 shown in Figure 2. Methods according to the present disclosure can be carried out by the computing device 6 or by a computing system including one or more computing devices 6.

The computing device 6 may comprise at least one classical processor 2 (Figure 1A) or at least one quantum processor 3 (Figure 1B) that implements for example a quantum annealer, and at least one memory 4. The at least one memory 4 may include instructions, for example in the form of a computer program code, so that a method according to the present disclosure, or stages of such a method, is carried out upon execution by the at least one classical processor 2 and/or the at least one quantum processor 3. In some examples, a computing device 6 may have several quantum processors to compute tasks in parallel. The computing device 6 also comprises a communications module 5 at least in the embodiments in which it is communicatively coupled with other computing devices, and/or with apparatuses or systems. The communications module 5 can be any known in the art for wired or wireless data communications. The computing device 6 may comprise or be part of: a computer processing unit, a graphics processing unit, or a field-programmable gate array.

Figure 2 schematically illustrates a computing system 1 according to embodiments of this disclosure. Computing systems 1 include one or more computing devices 6 communicatively coupled. One or more steps, or at least parts thereof, of a method according to this disclosure are executed by one or more computing devices 6. In particular, a computing system 1 for executing the method of this disclosure requires at least one computing device 6 having at least one classical processor 2 and at least one computing device 6 having at least one quantum processor 3. Each computing device 6 comprises one module 10, 20, 30 for performing certain tasks for operation of the computing system 1. Each module 10, 20, 30 is a processing module that comprises a computer program, and further comprises or is communicatively coupled with at least one processing unit and at least one memory unit for running the computer program as described with reference to Figure 1.

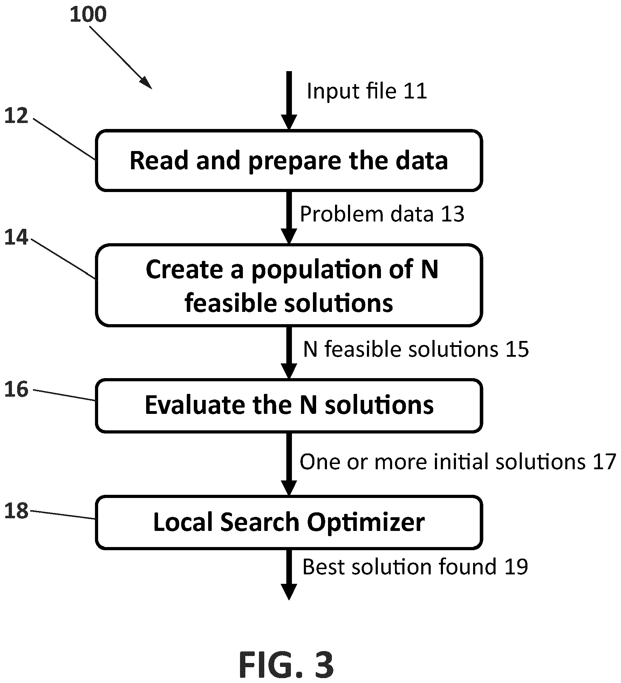

For example, the first computing device 6 may be a desk computer or a laptop used to receive, read and prepare the input data and prepare the CQM problem. To solve the CQM problem, the hybrid solver requires at least two computing devices 6, one having a classical processor and one having a quantum processor. In practice, since several threads are executed in parallel, as many quantum processors (such as quantum annealers) as threads to be executed may be required. Figure 3 shows a flow diagram of a method 100 for optimizing the storage of items in one or more locations according to embodiments of this disclosure.

An input file 11 provides the following data: A plurality of items $i \in I$ to be located, wherein each item of the plurality of items is defined by: type and the area $a_{i,l}$ it occupies, which is an integer constant value except for prohibited placements, where $a_{i,l} = \infty$; and wherein items of the same type can be stacked up to a maximum height of $h_i$, where $h_i = 1$ if item i cannot be stacked. The input file 11 also provides a plurality of available locations $l \in L$ in which items can be disposed, wherein each location of the plurality of available locations is defined by: i) total surface of the location; ii) already occupied surface; iii) time needed to store an item in the location; and iv) extra time needed for each height level.

In a first stage 12, the data in the input file 11 are read (and prepared if required). The input file 11 is in a suitable format, such as JSON, Excel, or another suitable one. Reading the input file 11 implies extracting therefrom information related to the items to be stored and to the locations. Thus, the problem data 13 (including plurality of items and plurality of locations) are obtained.

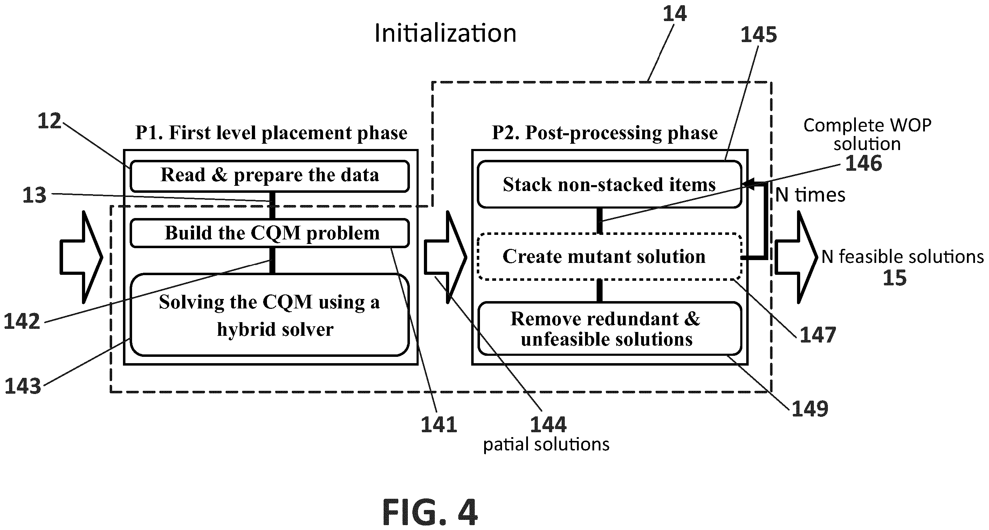

In a next stage 14, a set of N feasible solutions to the warehouse optimization problem are obtained. How this is performed is detailed with reference to Figure 4.

Stage 14 is performed at least partially in at least one quantum processor, such as the quantum processor 3 shown in Figure 1B, for example, in a quantum annealer.

Figure 4 shows a more detailed flow diagram of stages 12 and 14. Once the input data are read and the CQM is formulated, first level placement (block 143) and post-processing (blocks 145-149) are performed. Stage 14 corresponds to a stage of initialization of solutions.

From the problem data 13 read in stage 12, a constrained quadratic model problem (CQM problem) 142 is built in step 141. The CQM problem is built using the problem data 13 (plurality of items and plurality of locations), the problem restrictions, if any, and a cost function. Problem restrictions and cost function are typically imposed (defined) beforehand, meaning that they are independent from the problem data 13. The cost function of the CQM problem is to maximize the number of items stored at ground level.

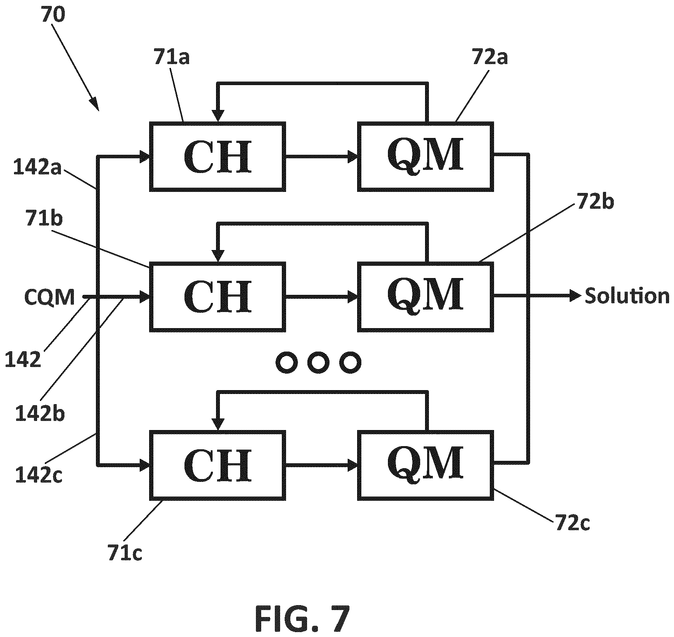

The CQM problem 142 (sub-WOP) is input into a hybrid solver implemented as a hybrid method. The method is called hybrid because it combines classical and quantum computing techniques or algorithms. The hybrid solver solves the CQM problem 142 as schematized with reference to Figure 7, using one or more quantum processors, for example quantum annealers. The CQM problem 142 is solved by maximizing the amount of items i stored, thus obtaining a set X = $\{X_1, \ldots, X_I\}$ of lists, in which each $X_i$ is a list associated with a single item i, $X_i = \{x_{i1}, \ldots, x_{iL}\}$, where $x_{il}$ is 1 if the item i is stored in location L, and 0 otherwise. This is a solution to the sub-WOP, because the CQM problem represents the sub-WOP.

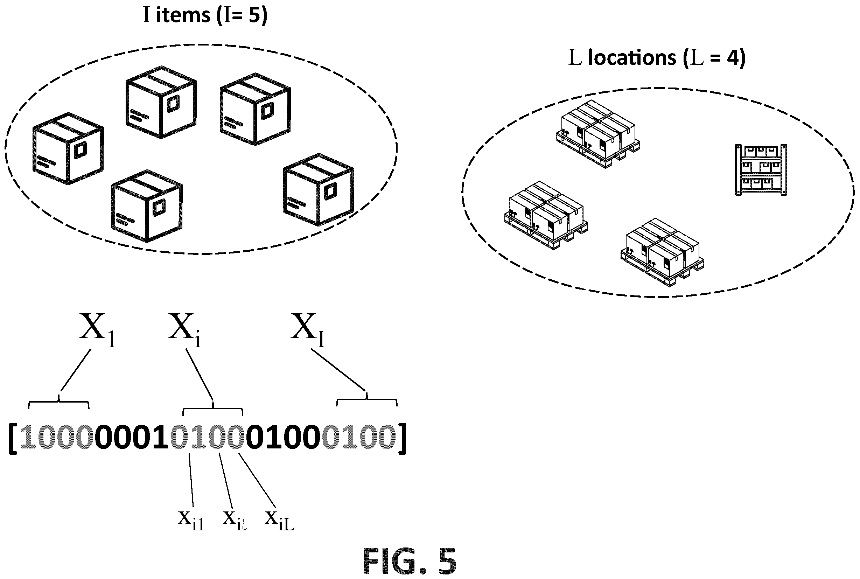

A non-limiting example of the encoding of the problem solutions is shown in Figure 5, in which, given 5 items (I = 5) and 4 possible locations (L = 4), a list Xi associated to item i is given. In the list, $x_{il}$ is 1 if the item i is stored in location L, and 0 otherwise.

The objective function o of sub-WOP is to maximize the amount of items stored at ground level, which can be formulated as

$$o = \min -\sum_{l=1}^{L} x_{il} \quad \forall i \in \{1, \ldots, I\}. \qquad (1)$$

This objective function o is the cost function (of the sub-WOP) to be solved by the hybrid solver.

In this embodiment the objective is represented as a minimization due to CQM requirements. This objective is subject to four restrictions. The first constraint establishes that an item i must be stored in, at most, one location L:

$$\sum_{l=1}^{L} x_{il} \le 1 \quad \forall i \in \{1, \ldots, I\}. \qquad (2)$$

The second restriction assures that items located in one specific location $l$ do not exceed its maximum available area:

$$\sum_{i=1}^{I} x_{il} * a_{il} \le c_l \quad \forall l \in \{1, \ldots, L\}. \qquad (3)$$

The third restriction guarantees that ony enabled items can be placed on shelves:

$$\sum_{l=1}^{L} x_{il} * a_{il} \ge 0 \quad \forall i \in \{1, \ldots, I\}. \qquad (4)$$

Last constraint imposes that all non-stackable items are stored:

$$\left(\sum_{i=1}^{I} x_{il}\right) - p_i \ge 0 \quad \forall i \in \{1, \ldots, I\}. \qquad (5)$$

where $p_i$ is 0 if item i can be stacked and 1 otherwise.

The problem data 13 can be provided by a user through user input means, e.g. a keyboard, a mouse, a touchscreen, a microphone, etc., that are connected to the computing device or system, or are connected to a different electronic device that is communicatively coupled with the computing device or system -e.g. via a wired or wireless connection-. Likewise, the problem data 13 can be stored on a server or in a memory of the computing device or system and retrieved therefrom, or can be provided by an apparatus or system in which the warehouse is modelled or stored. In this sense, the optimization problem relates to the apparatus or system since the problem data 13 characterizes operation or dynamics of the warehouse modelled in the apparatus or system.

When solving sub-WOP (the CQM problem), the hybrid solver creates a population of partial solutions 144. These solutions 144 are partial because they only refer to items disposed on the floor (not stacked ones). Here the first phase ends.

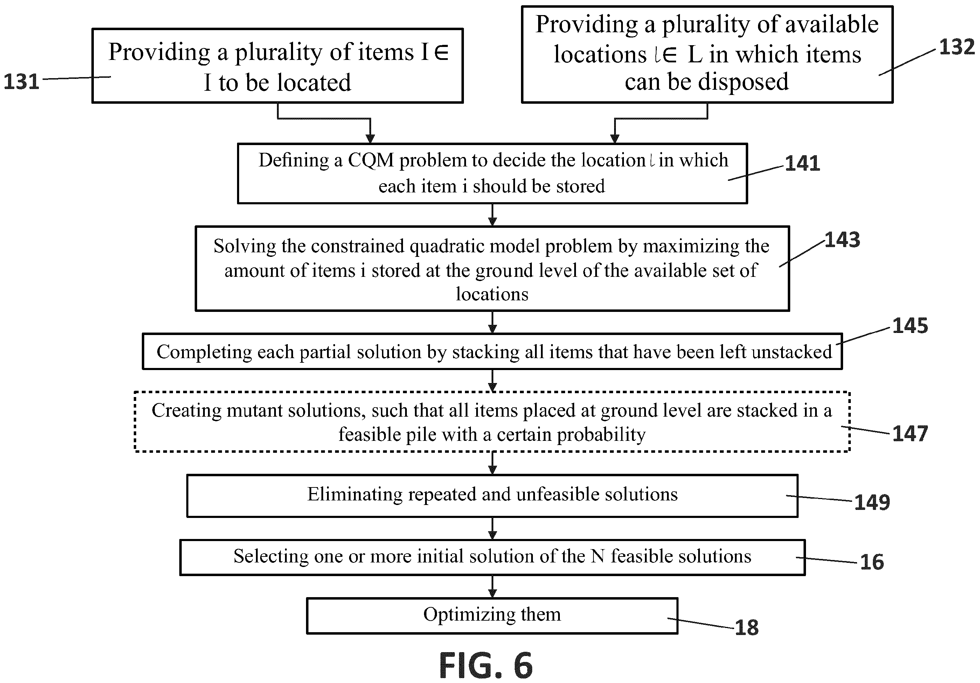

Figure 6 schematically illustrates a method for optimizing the disposition of items in a physical environment according to embodiments of this disclosure. The method comprises:

First (stages 131, 132), a plurality of items $i \in I$ to be located is provided, wherein each item of the plurality of items is defined by: its type and the area $a_{i,l}$ it occupies, which is an integer constant value except for prohibited placements, where $a_{i,l} = \infty$; and wherein items of the same type can be stacked up to a maximum height of $h_i$, where $h_i = 1$ if item i cannot be stacked; and a plurality of available locations $l \in L$ in which items can be disposed is provided, wherein each location of the plurality of available locations is defined by: i) total surface of the location; ii) already occupied surface; iii) time needed to store an item in the location; and iv) extra time needed for each height level.

Next (stage 141), a constrained quadratic model problem (CQM problem) is defined to decide the location L in which each item i should be stored.

Then (stage 143), the CQM problem is solved by maximizing the amount of items i stored at the ground level of the available set of locations, thus obtaining a set $X = \{X_1, \ldots X_I\}$ of lists, in which each Xi is a list associated with a single item i, $X_i = \{x_{i1}, \ldots, x_{iL}\}$, where $x_{il}$ is 1 if the item i is stored in location $l$, and 0 otherwise, wherein set X contains the partial solutions 144 to the constrained quadratic model problem.

Next (stage 145), each partial solution 144 is completed by stacking all items that have been left unstacked.

Then (stage 149), repeated and unfeasible solutions are eliminated, thus obtaining a set of N feasible solutions to the CQM problem.

Finally, one best initial solution of the N feasible solutions is selected (stage 16) and the selected best initial solution is optimized (stage 18).

Optionally, between stages 145 and 149, a stage of creating mutant solutions (stage 147), such that all items placed at ground level are stacked in a feasible pile with a certain probability, is performed. It is noted that dotted lines represent this optional stage in Figure 6.

Figure 7 schematically shows a block diagram of a hybrid solver 70 used to solve block 143 in Figure 4 (initialization phase) in embodiments of this disclosure.

The CQM formulation of the problem (definition of CQM problem) is introduced as input 142 into a classical front end of a hybrid solver 70. The hybrid solver 70 can be located in the cloud, wherein it is executed. In this first block, the solver 70 creates a plurality of threads 142a, 142b, 142c. Each of the identical threads will solve the CQM problem independently from the other threads. Since the CQM problem is stochastic, each obtained solution will be different. Each created threat 142a, 142b, 142c is executed in parallel on a set of computers, such as CPUs and/or GPUs. Each thread is directed to a branch having a Classical Heuristic Module (CH) 71a, 71b, 71c and a Quantum Module (QM) 72a, 72b, 72c. In each branch, the CH 71a, 71b, 71c formulates different quantum queries, which are executed by the QM 72a, 72b, 72c, and which are partial representations of the problem that are accommodated to the QPU capacity. The solutions provided by the QPU are employed to guide the CH toward promising areas of the solution search space. Furthermore, QM can even improve the solutions found by the CH. The solver uses a quantum processor or set of quantum processors for executing the quantum queries. For example, one quantum annealer comprising 5616 qubits organized in a Pegasus topology can be used by each of the threads.

Finally, after a predefined time limit T, all the branches (threads) 142a, 142b, 142c stop their execution and return their solutions to the front end. Then, the solver 70 forwards a set of N solutions found by respective threads, which represents a partial solution 144.

Each of the partial solutions 144 undergoes a post-processing stage (P2 in Figure 4) to perform the second phase, in which at least the creation of stacks of items with the non-stored items is performed.

In the second phase (post-processing stage), each partial solution 144 is completed in step 145 by stacking all items that have been left unstacked after the first phase. In step 145, first, the number of stacks that can be built for each item type is calculated. Then, each unstacked item is assigned to one stack, respecting the maximum height $h_i$, defined for its corresponding item type. Thus, the partial solution 144 is transformed into a complete WOP solution 146. This step 145 can be performed either in a quantum processor or in a classical one.

Optionally, mutant solutions are created in step 147. The motivation for this step is to add diversity to the population of solutions. To do this, a new mutant solution is created from the previously generated WOP solution 146, where all items placed at ground level are stacked in a feasible pile with a certain probability (for example, 50% probability). Solutions created in this step are added to the population. This step 147 can be performed either in a quantum processor or in a classical one.

The second phase ends in a step 149 by eliminating all repeated and unfeasible solutions (originated if any item remains unstacked after the post-process). Thus, N feasible solutions 15 are provided. This step 149 can be performed either in a quantum processor or in a classical one.

Turning back to Figure 3, once the N feasible solutions 15 to the warehouse problem (WOP) have been obtained, they are evaluated in stage 16, preferably in a classical processor, such as the classical processor 2 of Figure 1A, in which one or more initial solutions 17 of the N feasible solutions are selected. These N solutions are then optimized, providing a most optimal one 19.

In a particular implementation, at stage 16 the N feasible solutions 15 to the WOP can be evaluated, until a best initial solution 17 is selected. The selection of a best initial solution 17 is performed in a conventional way. For example, a best initial solution is selected, taking as a reference the objective function of the WOP: $X = x_1 o_1 + x_2 o_2$, wherein $o_1$ is objective 1 (to minimize the occupied space) and $o_2$ is objective 2 (to minimize the storage time). Thus, the best initial solution is a solution best balancing the two objectives of the WOP: minimizing occupied space and minimizing storage time; and $x_1$ $x_2$ are multiplying factors varying between 0 and 1 for weighing each objective. The selected best initial solution 17 is then fed to a conventional local search optimizer (stage 18), in which a best solution 19 is found. Non-limiting examples of the local search optimizer are tabu search, simulated annealing and variable neighborhood search. The local search optimizer is preferably implemented in a classical processor.

Examples and tests

A two-phase experimentation to assess the proposed method has been conducted. The objective of the first phase is to compare the efficiency of both a classical initialization module implemented with classical computing and the initialization phase proposed in the present disclosure, for creating feasible solutions. Five WOP instances have been used, each named as LX_IY_TZ, where X is the number of available locations, Y is the amount of items to store, and Z is the number of item types. Two of the instances are reproduced next to illustrate the example. The four first lines are descriptive. In the "LOCATIONS" section, for each location, the following information is provided: ID, time required to locate an item on the location, surface of the location, type of location ("0" denotes ground level, "1" denotes shelf), additional time required for stacking and occupied surface. In the "GOODS" section, the number of items of each type is given. In the "TYPES" section, for each type of item the following information is provided: identifier, occupied area, maximum height (maximum number of items to be stacked) and whether it can be stored on a shelf ("1") or not ("0").

```
NAME: L1_I50_T2
TYPE: Warehouse Optimization
COMMENT: 1-location 50-items 2-type Warehouse Optimization
DIMENSION: 50
LOCATIONS
1 32 1000 1 5 100
GOODS
1 24
2 12
3 14
TYPES
1 21 4 1
2 35 5 1
3 15 2 1
EOF
```

```
NAME: L4_I124_T3
TYPE: Warehouse Optimization
COMMENT: 4-locations 124-items 3-type Warehouse Optimization
DIMENSION: 124
LOCATIONS
1 10 1500 0 5 295
2 25 1000 0 5 268
3 40 1000 0 5 256
4 75 750 1 10 100
GOODS
1 55
2 41
3 28
TYPES
1 15 7 0
2 20 3 1
3 8 1 0
EOF
```

To perform the first phase, the hybrid solver called Leap Constrained Quadratic Model (CQM) Hybrid Solver of D-Wave has been used.

The outcomes of these tests are depicted in Table I, from which it can safely concluded that the proposed initialization method is able to generate significantly more feasible solutions in remarkably less time. Moreover, while the classic initialization struggles when the size of the instance increases, the proposed initialization method (referred to as QI4WOP) demonstrates to perform better as long as the complexity of the problem, and thus the solution search space, increases.

Table I

| Instance | QI4WOP | | Clas. Ini. | | Instance | QI4WOP | | Clas. Ini. | |
|---|---|---|---|---|---|---|---|---|---|
| | #sol | rt | #sot | rt | | #sol | rt | #sol | rt |
| **L1_I50_T2** | 29,9 | 15,7 | 8,5 | 30 | **L2_I75_T3** | 78,9 | 16,7 | 5,8 | 30 |
| **L3_I85_T4** | 96.9 | 17,4 | 4,9 | 30 | **L3_I100_T3** | 117,5 | 17,5 | 4,1 | 30 |
| **L4_I124_T3** | 115,3 | 18,0 | 3,4 | 30 | | | | | |

#SOL = number of feasible solutions produced; rt (runtimes) are in seconds, and for QI4WOP include D-Wave's queue time. For the classical method, 30 seconds have been set as maximum runtime. Values are the average after 10 independent runs.

The objective of the second phase is to measure the quality of the solutions produced by QI4WOP. For this purpose, the results obtained by the existing full-classical PoC have been compared against the PoC with QI4WOP embedded (by replacing the steps of the initialization stage) when solving the biggest instance, L4_I124_T3. To draw rigorous conclusions, the execution times of the classical initialization module have been significantly increased so that the number of initial solutions generated by both methods is the same. After 25 independent runs, the PoC with QI4WOP embedded has outperformed the full-classical PoC in 48% of the executions.

As a general conclusion, it can preliminary be stated that the use of QI4WOP leads to similar performance in terms of results quality, while the savings in terms of computational time are remarkable. This latter aspect can certainly prove to be key in real industrial environments. The results obtained allow us to highlight the work carried out in this research as an example of the utility that quantum computers can offer today, represent the first steps towards obtaining what is known as quantum utility.

In this text, the term "comprises" and its derivations -such as "comprising", etc.- should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art -for example, as regards the choice of materials, dimensions, components, configuration, etc.-, within the general scope of the disclosure as defined in the claims.

## Claims

1. A computer-implemented method for optimizing the disposition of items in one or more locations of a physical environment, comprising:

   providing (132) a plurality of available locations $l \in L$ in which items can be disposed, wherein each location of the plurality of available locations is defined by: *i)* total surface of the location; *ii)* already occupied surface; *iii)* time needed to store an item in the location; and *iv)* extra time needed for each height level;
   providing (131) a plurality of items $i \in I$ to be located, wherein each item of the plurality of items is defined by: its type and the area $a_{i,l}$ it occupies, which is an integer constant value except for prohibited placements, where $a_{i,l} = \infty$; and wherein items of the same type can be stacked up to a maximum height of $h_i$, where $h_i=1$ if item i cannot be stacked;
   defining (141) a problem associated to a WOP for storing as many items as possible at ground level, said problem being defined as a constrained quadratic model problem (CQM problem) to decide the location I in which each item i should be stored;
   solving (143) the CQM model problem by maximizing the amount of items i stored at the ground level of the available set of locations, thus obtaining partial solutions;
   completing (145) each partial solution (144) by stacking, if required, all items that have been left unstacked;
   eliminating (149) repeated and unfeasible solutions, thus obtaining a set of N feasible solutions to the WOP;
   selecting (16) one or more initial solutions of the N feasible solutions and
   optimizing (18) them, providing a most optimal one,
   wherein solving (143) the CQM problem is done at least partially in a quantum computer.

2. The method of claim 1, wherein stacking all items that have been left unstacked is done as follows:

   calculating a number of stacks that can be built for each item type;
   assigning each unstacked item to one stack, respecting the maximum height $h_i$, defined for its corresponding item type.

3. The method of claim 2, further comprising, after completing each partial solution by stacking all items that have been left unstacked:
   creating (147) mutant solutions, such that all items placed at ground level are stacked in a feasible pile with a certain probability.

4. The method of any one of claims 1-3, wherein the CQM problem is defined from the plurality of items, the plurality of locations, problem restrictions and a cost function.

5. The method of claim 4, wherein the cost function of the CQM problem is to maximize the number of items stored at ground level.

**6.** The method of claim 5, wherein maximizing the number of items stored at ground level is formulated as follows:

$$o = \min - \sum_{l=1}^{L} x_{il} \ \forall i \epsilon\{1, \dots, I\}$$

wherein $x_{il}$ are the elements of list Xi which is a list associated with item i, $X_i = \{x_{i1}, \dots, x_{iL}\}$, where $x_{il}$ is 1 if the item i is stored in location $l$, and 0 otherwise, I is the total number of items and L is the total number of locations.

**7.** The method of any one of claims 5-6, wherein to maximize the number of items stored at ground level the following restrictions are imposed:

a first constraint according to which an item i must be stored in, at most, one location L:

$$\sum_{l=1}^{L} x_{il} \leq 1 \ \forall i \epsilon\{1, \dots, I\}$$

a second constraint according to which items located in one specific location L do not exceed its maximum available area C, wherein $a_{i,l}$ is the area item i occupies at location $l$ and $c_l$ is the capacity of location $l$:

$$\sum_{i=1}^{I} x_{il} * a_{il} \leq c_l \ \forall l \epsilon\{1, \dots, L\}$$

a third constraint according to which only enabled items can be placed on shelves:

$$\sum_{l=1}^{L} x_{il} * a_{il} \geq 0 \ \forall i \epsilon\{1, \dots, I\}$$

a fourth constraint according to which all non-stackable items are stored:

$$\left(\sum_{i=1}^{I} x_{il}\right) - p_i \geq 0 \ \forall i \epsilon\{1, \dots, I\}$$

where $p_i$ is 0 if item i can be stacked and 1 otherwise.

**8.** The method of any one of claims 1-7, wherein solving (143) the CQM model problem to obtain partial solutions (144) to the WOP problem, comprises:

providing the CQM problem to a solver (70);
creating a plurality of threads (142a, 142b, 142c) of the CQM problem, wherein each thread is composed of a classical heuristic software module (71a, 71b, 71c) and a quantum software module (72a, 72b, 72c);
executing each thread in parallel, wherein each quantum software module (72a, 72b, 72c) is executed in a quantum processor, preferably a quantum annealer, thus obtaining one solution to the CQM problem per thread.

**9.** The method of any one of claims 1-8, wherein selecting (16) one or more initial solutions of the N feasible solutions and optimizing (18) them, providing a most optimal one is done as follows:

selecting (16) one best initial solution of the N feasible solutions; and
optimizing (18) the selected best initial solution.

**10.** The method of any one of claims 1-9, wherein the physical environment is a warehouse.

**11.** A data processing device or data processing system comprising means for carrying out the steps of the method of anyone of claims 1-10, which preferably comprises at least one quantum processor.

**12.** The data processing device or the data processing system of claim 11, which comprises at least one classical processor.

**13.** A computer program product comprising instructions which, when the program is executed by a computer, cause the computer to carry out the steps of the method of anyone of claims 1-10.

14. A non-transitory computer-readable medium encoded with instructions that, when executed by at least one processor or hardware, perform or make a device to perform the steps of the method of anyone of claims 1-10.

15. A computer-readable data carrier having stored thereon a computer program product according to claim 13.

FIG. 1A

FIG. 1B

**FIG. 2**

100

Input file 11

12 — **Read and prepare the data**

Problem data 13

14 — **Create a population of N feasible solutions**

N feasible solutions 15

16 — **Evaluate the N solutions**

One or more initial solutions 17

18 — **Local Search Optimizer**

Best solution found 19

# FIG. 3

Initialization

FIG. 4

I items (I= 5)

L locations (L = 4)

$X_1$  $X_i$  $X_I$

[100000010100010000100]

$x_{i1}$  $x_{i\ell}$  $x_{iL}$

**FIG. 5**

EP 4 711 994 A1

```
┌─────────────────────────────────┐        ┌──────────────────────────────────┐
│ Providing a plurality of items I ∈ │        │ Providing a plurality of available │ ─ 132
│        I to be located           │        │ locations l∈ L in which items      │
│                                  │        │        can be disposed           │
└─────────────────────────────────┘        └──────────────────────────────────┘
131
```

Defining a CQM problem to decide the location *l* in which each item i should be stored — 141

Solving the constrained quadratic model problem by maximizing the amount of items i stored at the ground level of the available set of locations — 143

Completing each partial solution by stacking all items that have been left unstacked — 145

Creating mutant solutions, such that all items placed at ground level are stacked in a feasible pile with a certain probability — 147

Eliminating repeated and unfeasible solutions — 149

Selecting one or more initial solution of the N feasible solutions — 16

Optimizing them — 18

**FIG. 6**

**FIG. 7**

**EUROPEAN SEARCH REPORT**

Europäisches Patentamt
European Patent Office
Office européen des brevets

**Application Number**

EP 24 38 2979

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | D-Wave Systems: "GitHub - dwave-examples/3d-bin-packing at abb0ebd356eaaae1efc749e86ce7dbcd1e883771", , 19 April 2024 (2024-04-19), pages 1-9, XP093247187, Retrieved from the Internet: URL:https://github.com/dwave-examples/3d-bin-packing/tree/abb0ebd356eaaae1efc749e86ce7dbcd1e883771 [retrieved on 2025-02-06] * the whole document * | 1-6, 11-15 | INV. G06Q10/04 G06N10/00 G06Q10/08 G06F8/41 G06N10/60 |
| T | D-Wave Systems: "Commits . dwave-examples/3d-bin-packing . GitHub", , 19 April 2024 (2024-04-19), pages 1-5, XP093247190, Retrieved from the Internet: URL:https://github.com/dwave-examples/3d-bin-packing/commits/abb0ebd356eaaae1efc749e86ce7dbcd1e883771/ [retrieved on 2025-02-06] * the whole document * | | |
| A | D-Wave Systems: "Measuring Performance of the Leap Constrained Quadratic Model Solver: August 2023 Update", , 9 August 2023 (2023-08-09), pages 1-9, XP093247221, Retrieved from the Internet: URL:https://www.dwavesys.com/media/kxib1joe/14-1065b-b_measuring_performance_of_the_leap_constrained_quadratic_model_solver_august_2023_update.pdf [retrieved on 2025-02-06] * the whole document * | 1-15 | TECHNICAL FIELDS SEARCHED (IPC) G06Q G06N G06F |

The present search report has been drawn up for all claims

| Place of search | Date of completion of the search | Examiner |
|---|---|---|
| Munich | 20 February 2025 | Härdeman, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)